# EUROPEAN PATENT SPECIFICATION

(11) **EP 4 462 247 B1**
(45) Date of publication and mention of the grant of the patent: **04.02.2026**
(21) Application number: 23214820.5
(22) Date of filing: 07.12.2023
(51) Int. Cl.: G06F 8/35, G06N 20/00, G06N 3/045, G06N 3/047, G06N 3/08

(54) **GENERATIVE ARTIFICIAL INTELLIGENCE FOR SERVER GENERATION**
GENERATIVE KÜNSTLICHE INTELLIGENZ ZUR SERVERERZEUGUNG
INTELLIGENCE ARTIFICIELLE GÉNÉRATIVE POUR LA GÉNÉRATION DE SERVEUR

(30) Priority: 12.05.2023 US 202318196836
(43) Date of publication of application: 13.11.2024
(73) Proprietor: SAP SE, 69190 Walldorf (DE)
(72) Inventor: KUNZ, David, 69190 Walldorf (DE)
(74) Representative: Müller-Boré & Partner Patentanwälte PartG mbB

(56) References cited:
- US-A1- 2022 019 932
- STEVEN2358: "Awesome-generative-ai: A curated list of modern Generative Artificial Intelligence projects and services", 28 April 2023 (2023-04-28), XP093163384, Retrieved from the Internet <URL:https://web.archive.org/web/20230428082747/https://github.com/steven2358/awesome-generative-ai> [retrieved on 20240516]

## Description

### TECHNICAL FIELD

This document generally relates to computer systems. More specifically, this document relates to use of generative artificial intelligence for server generation.

### BACKGROUND

In a computer system, software servers are often used to manage applications that interact with one or more software clients over a computer network, such as the Internet. An OData server is a type of web server that implements the Open Data Protocol (OData) to enable the creation and consumption of RESTful Application Program Interfaces (APIs) for data sources. OData is a protocol for creating and consuming data APIs that are consistent with RESTful principles and expose data as resources that can be accessed using standard HyperText Transfer Protocol (HTTP)- methods like GET, POST, PUT, and DELETE.

An OData server allows developers to expose data from various sources such as databases, file systems, or web services as OData feeds, which can be consumed by client applications. The OData server maps the HTTP requests to the corresponding data operations and returns the data in a standardized format, typically JavaScript Object Notation (JSON) or Extensible Markup Language (XML).OData servers are used in various contexts, such as enterprise data integration, business intelligence, and mobile application development. They enable the creation of scalable and flexible APIs that can be consumed by a wide range of clients, including web and mobile applications, desktop software, and other backend systems.

"Steven2358: "Awesome-generative-ai : A curated list of modern Generative Artificial Intelligence projects and services", 28 April 2023 (2023-04-28), XP093163384, Retrieved from the Internet: URL:https://web.archive.org/web/20230428082747/https://https://github.com/steve n2358/awesome-generative-ai [retrieved on 2024-05-16]" describes Generative Artificial Intelligence as a technology that creates original content such as images, sounds, and texts by using machine learning algorithms that are trained on large amounts of data. Unlike other forms of AI, it is capable of creating unique and previously unseen outputs such as photorealistic images, digital art, music, and writing.

US 2022/019932 A1 describes methods, systems, and computer-readable storage media for receiving, by an Open Data Protocol (OData) service generation platform, an image of a sketch on a physical artifact, processing the image using a set of ML models to detect depiction of two or more entities and at least one association between entities, the set of ML models including at least one layout analysis ML model to identify two or more sections within images, at least one object detection ML model to identify one or more of entities and associations in each section of the two or more sections, and at least one text recognition ML model to determine text associated with entities in sections, generating an entity data model (EDM) based on output of the ML models that includes the two or more entities and the at least one association, and providing an OData service based on the EDM.

### BRIEF DESCRIPTION OF DRAWINGS

The present disclosure is illustrated by way of example and not limitation in the figures of the accompanying drawings, in which like references indicate similar elements.
Figure 1 is a block diagram illustrating a system for automatically generating a software server, in accordance with an example embodiment.
Figure 2 is a flow diagram illustrating a method for automatically generating a software server, in accordance with an example embodiment.
Figure 3 is a block diagram illustrating an architecture of software, which can be installed on any one or more of the devices described above.
Figure 4 illustrates a diagrammatic representation of a machine in the form of a computer system within which a set of instructions may be executed for causing the machine to perform any one or more of the methodologies discussed herein, according to an example embodiment.

### DETAILED DESCRIPTION

The underlying technical problem is solved by the subject-matter having the features of the independent claims. Additional embodiments are defined in the dependent claims.

The description that follows discusses illustrative systems, methods, techniques, instruction sequences, and computing machine program products. In the following description, for purposes of explanation, numerous specific details are set forth in order to provide an understanding of various example embodiments of the present subject matter. It will be evident, however, to those skilled in the art, that various example embodiments of the present subject matter may be practiced without these specific details.

Some of the example embodiments described herein provide a method and system for automatically generating software servers, such as web servers, that are implemented using Open Data Protocol (OData).

"OData," as used herein, may refer specifically to the Open Data Protocol, an open web protocol for querying and communicating data using Representational State Transfer (REST) web services, but could also apply to other types of web services. OData enables the creation and use of HTTP-based data services, which allow resources identified using Uniform Resource Identifiers (URIs) and defined in an abstract data model, to be published and edited by Web clients using simple HTTP messages. OData typically uses commonly deployed web technologies such as Transmission Control Protocol (TCP), HTTP, Atom Publishing Protocol, XML, and JSON to exchange data between systems. The results of OData queries (payloads) are typically structured in readily parseable formats, such as Atom, JSON, or XML, and may be parsed by any number of client libraries provided by platforms such as .NET, Silverlight, Java, AJAX, PHP, and mobile development platforms. OData, as used herein, may refer to any standardized or non-standardized version of the OData protocol, or like web protocols (e.g., Google Data Protocol (GData)) communicating using REST-based web service communication techniques.

"Server" as used herein will generally refer to a software server, however it is possible that in some embodiments the software will be embodied in hardware. In most contexts, however, the software server will run on some sort of hardware.

"Service" as used herein will generally refer to a software system designed to allow different machines or applications to communicate with each other over the Internet. In other words, it is a grouping of exposed functionality such as entities, actions, and functions. It can provide a standard method of communication between different software applications, regardless of their platform or programming language.

It can be technically challenging to create software servers, especially OData servers. Data models and data must be manually created, and errors introduced during the creation process are also difficult to detect and correct.

In an example, Generative Artificial Intelligence (GAI) is utilized to automatically generate software servers. More particularly, a GAI model may be used to create a declarative-based data model and accompanying data for a software server, such as a web server. Furthermore, the created declarative-based data model can be automatically tested and resubmitted to the GAI model to refine the software server file upon failure of the testing.

Cloud computing can be described as Internet-based computing that provides shared computer processing resources, and data to computers and other devices on demand. Users can establish respective sessions, during which processing resources, and bandwidth are consumed. During a session, for example, a user is provided on-demand access to a shared pool of configurable computing resources (e.g., computer networks, servers, storage, applications, and services). The computing resources can be provisioned and released (e.g., scaled) to meet user demand. An example cloud platform includes SAP Cloud Application Platform (CAP), from SAP SE of Walldorf, Germany. A cloud platform may run a data model infrastructure, where data models can be created and run.

One example of such a data model infrastructure is Core Data Services (CDS) from SAP SE of Walldorf, Germany. CDS enables service definitions and data models to be declaratively captured in plain object notations. CDS models are typically written in CDS language, and when compiled are typically stored in Javascript Object Notation (JSON) files, which comply with a standard notation, such as core schema notation (CSN). These models are compiled and run on a server, which can then handle requests for the application defined by the model(s) as they come in.

A common architecture in cloud platforms includes services (also referred to as microservices), which have gained popularity in service-oriented architectures (SOAs). In such SOAs, applications are composed of multiple, independent services. The services are deployed and managed within the cloud platform and run on top of a cloud infrastructure. In some examples, service-based applications can be created and/or extended using an application programming framework. In an example embodiment, the software servers created implement the services.

According to embodiments of the invention, the GAI model is implemented as a generative pre-trained transformer (GPT) model or a bidirectional encoder. A GPT model is a type of machine learning model that uses a transformer architecture, which is a type of deep neural network that excels at processing sequential data, such as natural language.

A bidirectional encoder is a type of neural network architecture in which the input sequence is processed in two directions: forward and backward. The forward direction starts at the beginning of the sequence and processes the input one token at a time, while the backward direction starts at the end of the sequence and processes the input in reverse order.

By processing the input sequence in both directions, bidirectional encoders can capture more contextual information and dependencies between words, leading to better performance.

The bidirectional encoder may be implemented as a Bidirectional Long Short-Term Memory (BiLSTM) or BERT (Bidirectional Encoder Representations from Transformers) model.

Each direction has its own hidden state, and the final output is a combination of the two hidden states.

Long Short-Term Memories (LSTMs) are a type of recurrent neural network (RNN) that are designed to overcome the vanishing gradient problem in traditional RNNs, which can make it difficult to learn long-term dependencies in sequential data.

LSTMs include a cell state, which serves as a memory that stores information over time. The cell state is controlled by three gates: the input gate, the forget gate, and the output gate. The input gate determines how much new information is added to the cell state, while the forget gate decides how much old information is discarded. The output gate determines how much of the cell state is used to compute the output. Each gate is controlled by a sigmoid activation function, which outputs a value between 0 and 1 that determines the amount of information that passes through the gate.

In BiLSTM, there is a separate LSTM for the forward direction and the backward direction. At each time step, the forward and backward LSTM cells receive the current input token and the hidden state from the previous time step. The forward LSTM processes the input tokens from left to right, while the backward LSTM processes them from right to left.

The output of each LSTM cell at each time step is a combination of the input token and the previous hidden state, which allows the model to capture both short-term and long-term dependencies between the input tokens.

BERT applies bidirectional training of a model known as a transformer to language modelling. This is in contrast to prior art solutions that looked at a text sequence either from left to right or combined left to right and right to left. A bidirectionally trained language model has a deeper sense of language context and flow than single-direction language models.

More specifically, the transformer encoder reads the entire sequence of information at once, and thus is considered to be bidirectional (although one could argue that it is, in reality, non-directional). This characteristic allows the model to learn the context of a piece of information based on all of its surroundings.

In other example embodiments, a GAN embodiment may be used. GAN is a supervised machine learning model that has two sub-models: a generator model that is trained to generate new examples, and a discriminator model that tries to classify examples as either real or generated. The two models are trained together in an adversarial manner (using a zero sum game according to game theory), until the discriminator model is fooled roughly half the time, which means that the generator model is generating plausible examples.

The generator model takes a fixed-length random vector as input and generates a sample in the domain in question. The vector is drawn from randomly from a Gaussian distribution, and the vector is used to seed the generative process. After training, points in this multidimensional vector space will correspond to points in the problem domain, forming a compressed representation of the data distribution. This vector space is referred to as a latent space, or a vector space comprised of latent variables. Latent variables, or hidden variables, are those variables that are important for a domain but are not directly observable.

The discriminator model takes an example from the domain as input (real or generated) and predicts a binary class label of real or fake (generated).

Generative modeling is an unsupervised learning problem, as we discussed in the previous section, although a clever property of the GAN architecture is that the training of the generative model is framed as a supervised learning problem.

The two models, the generator and discriminator, are trained together. The generator generates a batch of samples, and these, along with real examples from the domain, are provided to the discriminator and classified as real or fake.

The discriminator is then updated to get better at discriminating real and fake samples in the next round, and importantly, the generator is updated based on how well, or not, the generated samples fooled the discriminator.

In another embodiment of the invention, the GAI model is a Variational AutoEncoders (VAEs) model. VAEs comprise an encoder network that compresses the input data into a lower-dimensional representation, called a latent code, and a decoder network that generates new data from the latent code. In either case, the GAI model contains a generative classifier, which can be implemented as, for example, a naive Bayes classifier.

CAP-based server files are in a declarative format. A declarative format is one in which one declares the intention/end-result of the program, instead of how it should be reached. Declarative code is typically comprised of statements that invoke high-level functions or abstractions with clear human-readable intent. Conversely, imperative format is comprised of statements that clearly impart their effects on the program state without reference to any high-level goal.

In other words, a file in declarative format defines the structure and elements of a computer program using the logic of a computation without describing its control flow. In declarative programming, there are a number of sub paradigms that can be used, including constraint programming (where relations between variables are expressed in the form of constraints that specify the properties of a target solution), domain-specific languages (a language defined for a specific application domain), functional programming (where expressions are evaluated via function applications), and hybrid languages (which mix declarative and imperative programming).

Thus, the GAI model generates declarative files, which leads to better/more accurate results than if it was asked to generate imperative files.

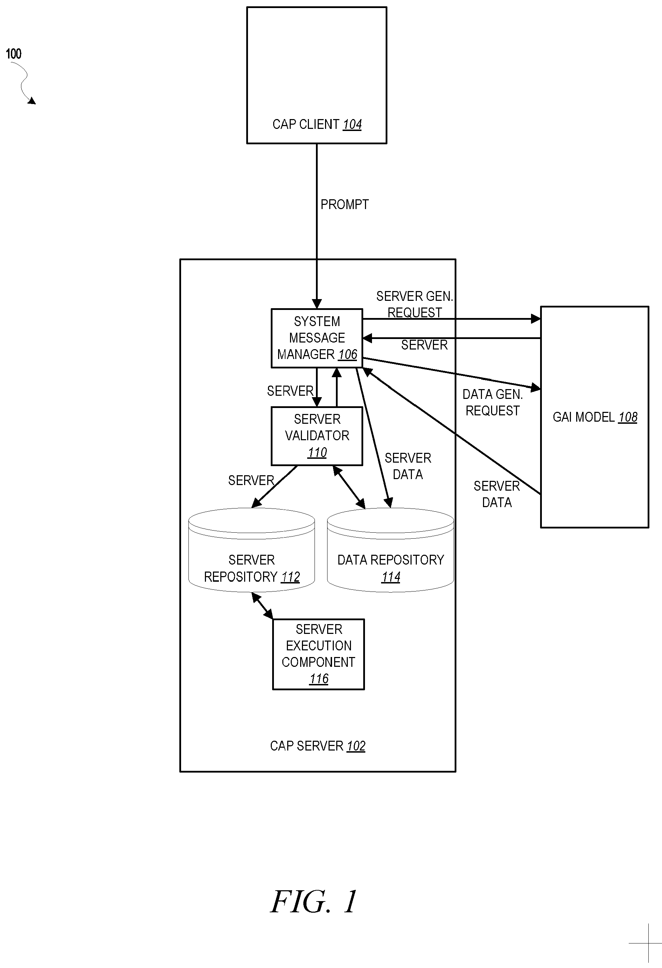

Figure 1 is a block diagram illustrating a system 100 for automatically generating a software server, in accordance with an example embodiment. Here, a CAP server 102 provides a server allowing one or more CAP clients, such as CAP client 104, to create and manage software servers, such as OData servers for web services. Since the CAP server 102 provides a server that implements a software framework for creating and managing applications, it may be generally referred to as a framework server. Likewise, since the CAP client 104 interfaces with the CAP server 102 in a client-server relationship, it may be generally referred to as a framework client. The CAP client 104 may generate model information that includes user interface annotations. A graphical user interface can then be generated on the fly, using the user interface annotations, where a user can issue requests to the CAP server 102. In this case, the user inputs or otherwise selects a natural language text prompt generally describing the service for which the user wants the software service generated. For example, the user may input something like "Help Desk Ticketing System: This application manages customer inquiries and support requests, including ticket creation, assignment, and resolution. Entities include tickets, customers, support agents, and knowledge base articles. Relations include ticket-customer, ticket-support agent, and ticket-knowledge base article."

The prompt is received by a system message manager 106 in the CAP server 102. The system message manager 106 acts to manage the server and server data generation requests to a GAI model 108. More specifically, the system message manager 106 adds a system message to the prompt. The system message essentially acts as instructions to the GAI model 108 providing additional detail as to what the GAI model 108 should generate. This system message may be general in nature, in that it can apply to many or even all of the server generation requests issued by the system message manager 106. In some example embodiments, however, the system message may be more personalized, allowing for, for example, different system messages for different organizations, locations, server types, etc.

The system message and prompt are then sent to the GAI model 108 as a server generation request. The GAI model 108 then uses the server generation request as input to generate a server. This server is then returned to the system message manager 106. The GAI model 108 may be, for example, a large language model (LLM).

In an example embodiment, the generation of the server involves generating an OData Service, including its schemata and services, based on the prompt and system message.

Once the server has been generated, the system message manager 106 can move to generating the server data. The system message manager 106 creates a data folder as well as files (such as comma-separated values (CSV) files) that do not yet contain data, just headers (such as a header line with column name). This creation is based on one or more of the generated server files. Then one or more of the generated server files are used to create one or more statements. In an example embodiment, the statements are Structured Query Language (SQL) create table statements. These statements contain the exact shape of the database tables, including the associations between tables. These statements, as well as the empty files in the created data folder, can be added to a separate system message to create a data generation request. This separate system message again essentially acts as instructions to the GAI model 108 providing additional detail as to what the GAI model 108 should generate. This system message may be general in nature, in that it can apply to many or even all of the server generation requests issued by the system message manager 106. In some example embodiments, however, the system message may be more personalized, allowing for, for example, different system messages for different organizations, locations, server types, etc.

The data generation request is then sent to the GAI model 108, which then generates and returns server data.

The system message manager 106 then can utilize a server validator to validate the generated server. Validation may include running one or more tests on the generated server to ensure that it complies with established standards. One such test may be an attempt to compile the generated server. Other tests may test accuracy, efficiency, or some metric of the server by testing it using the generated server data. If the generated server fails one or more of the validation tests, then the system message manager 106 may retry the server generation request, either by resubmitting the exact same server generation request as it did last time, or by modifying the system message in some way to further affect change. This modification may include, for example, adding in to a server generation request whatever validation error was returned during the first failed validation test. It then receives back a regenerated server, which again can be tested by the server validator 110. Once the server validator 110 successfully validates the server, then the server may be written to a server repository 112, and the server data can be written to a data repository 114.

A server execution component 116 then, at some later time, runs the defined server by executing the server files in the server repository 112.

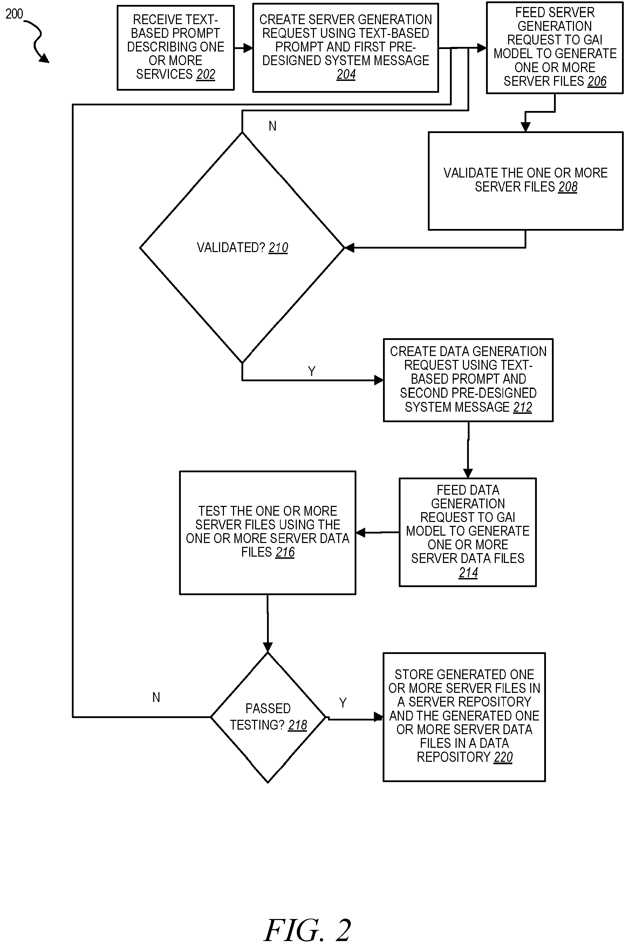

Figure 2 is a flow diagram illustrating a method 200 for automatically generating a software server, in accordance with an example embodiment. Here, at operation 202, a text-based prompt describing one or more services is received from a framework client. At operation 204, a server generation request is created using the text-based prompt and a first pre-designed system message. In an example embodiment, the prompt is appended to the first pre-designed system message to create the server generation request.

At operation 206, the server generation request is fed to a GAI model to generate one or more server files defining a model definition for a service executable in the framework server. In an example embodiment, the one or more server files are in a declarative format and may comprise a schema file and a service file. The schema file and the service may, for example, define an OData service.

At operation 208, the one or more server files is validated. This may include attempting to compile the one or more server files. At operation 210, it is determined if the one or more server files was successfully validated. If not, then the method proceeds back to operation 206 where the server generation request is re-sent to the GAI model, to regenerate the one or more server files.

Once the one or more server files are successfully validated, then at operation 212, a data generation request is created using the text-based prompt and a second pre-designed system message. In an example embodiment, the creation is performed by appending the text-based prompt to the second pre-designed system message. Then at operation 214, the data generation request is fed to the GAI model to generate one or more server data files. At operation 216, the one or more server files are tested using the one or more server data files. At operation 218, it is determined whether the one or more server files have passed the testing. If not, then the method 200 returns to operation 212. If so, then at operation 220, the generated one or more server files are stored in a server repository and the generated one or more server data files are stored in a data repository.

What follows is an example of a prompt provided by a user and the corresponding system messages generated and ultimately a sample server and server data, in accordance with an example embodiment.

Here, the user may enter the following prompt for a desired application: "an app that manages inventory in the tile warehouse." The system message manager may receive this prompt and add the following system message to the prompt to create a sever generation request:

```
 Imagine you're an expert for the SAP Cloud Application Programming Model. Do
 not generate anything right now and wait for further input in another prompt. Also
 don't generate an example. Your job is it to wait for further user input. An example
 model could look like \n" +
   '\n' +
   '‴cds\n' +
   'namespace custom.namespace;\n' +
   'entity SomeEntity { \n' +
   ' key ID: UUID;\n' +
   " someField: String @assert.format: '[a-z]ear';\n" +
   ' someOtherField: String @assert.unique;\n' +
   ' someBoolean: Boolean;\n' +
   ' someInteger: Integer @assert.range: [ 0, 3 ];\n' +
   ' someAssoc: Association to AnotherEntity;\n' +
   ' someComp: Composition of AnotherEntity;\n' +
   ' manyOthers: Association to many AnotherEntity on manyOthers.parent =
 $self;\n' +
   '}\n' +
   '\n' +
   'entity AnotherEntity {\n' +
   ' key ID: UUID;\n' +
   ' parent: Association to SomeEntity;\n' +
   '}\n' +
   '‴.\n' +
   '\n' +
   'Use the following rules:\n' +
   '- Use upper camel case for entity names and lower camel case for properties.\n'
 +
   '- Make sure each entity has some realistic properties.\n' +
   '- Keep in mind that associations and compositions are defined in the entity
 itself.\n' +
   '- "Association to many" and "Compositions of many" must have on condition
 that means: "Association to many Books;" or "Composition of many Books;" IS
 NOT ALLOWED!\n' +
   '- In an on condition, you can only compare to '$self' if the target property is an
 association without an on condition.\n' +
   '- In an on condition, use the name of the own property to refer to the
 association, i.e. 'foo: Association to many Bar on foo.x = y' (not 'Bar.x')\n' +
   '- Associations are links between entities, compositions too with the addition that
 they are self contained.\n' +
   '- Use a UUID key with name 'ID'. Make sure to always use proper namespaces
 and import the CDS file in the 'db' directory properly. \n' +
   '\n' +
   'An example could be\n' +
   '‴cds\n' +
   "using { custom.namespace } from '../db/schema.cds';\n" +
   '\n' +
   'service MyService {\n' +
   ' entity SomeEntity as projection on namespace.SomeEntity;\n' +
   ' entity AnotherEntity as projection on namespace.AnotherEntity;\n' +
   '}\n' +
   '\n' +
   'service AnotherService {\n' +
   ' @readonly entity SomeEntity as projection on namespace.SomeEntity;\n' +
   ' @readonly entity AnotherEntity as projection on namespace.AnotherEntity;\n'
 +
   '}\n' +
   '‴\n' +
   'Make sure that every service contains all relevant entities and their association
 targets if they must be accessible. To refer to the imported namespace, just use the
 last word of it, in the example above 'namespace.SomeEntity', do not use the full
 namespace like in 'custom.namespace.SomeEntity' .\n' +
   'Do not generate any explanation text, or any other text, just model definitions,
 nothing else.\n' +
   '\n' +
   'The format of a model definition must be\n' +
   '###<filename>\n' +
   '‴cds\n' +
   '<CDS model content>\n' +
   '‴\n' +
   '\n' +
   'Example:\n' +
   '###db/schema.cds\n' +
   '‴cds\n' +
   'entity Foo {\n' +
   ' key ID: UUID;\n' +
   '}\n' +
   '‴\n' +
   'Your job is it to receive a prompt to create the model. Just output the model
 which is compliant to the prompt.\n' +
   'Now wait for the instruction of the user who can provide a textual description of
 the model to generate a CDS model in the 'db/schema.cds' directory for the data
 definitions and in 'srv/service.cds' for the service definitions. The model will be
 described to you in the next prompt. \n'
```

In response to this, the GAI model may generate the following schema file:

```
 ### db/schema.cds
 ‴cds
 namespace tile.warehouse;
 using { UUID, Composition } from '@sap/cds/common';
 entity Warehouse {
 key ID: UUID;
 name: String @assert.present;
 location: String @assert.present;
 tiles: Composition of many TileStorage on tiles. warehouse = $self;
 }
 entity TileType {
 key ID: UUID;
 name: String @assert.present;
 size: String @assert.present;
 color: String @assert.present;
 description: String;
 inventory: Composition of many TileStorage on inventory.tileType = $self;
 entity TileStorage {
 key ID: UUID;
 warehouse: Association to Warehouse;
 tileType: Association to TileType;
 quantity: Integer;
 ‴
```

The GAI mode may also generate the following service file:

```
 ### srv/service.cds
 ‴cds
 using { tile.warehouse } from '../db/schema.cds';
 service TileWarehouseService {
 entity Warehouses as projection on warehouse.Warehouse;
 entity TileTypes as projection on warehouse.TileType;
 entity TileStorage as projection on warehouse.TileStorage;
 ‴
```

Taken together, the schema file and the service file constitute a software server, which can then be validated. As mentioned before, this validation can include an attempt to compile. Here, a first attempt at compilation fails, returning the following errors:

```
 [ERROR] db/schema.cds:3:9-13: Artifact "UUID" has not been found (in
 using:"UUID")
 [ERROR] db/schema.cds:3:15-26: Artifact "Composition" has not been found (in
 using: "Composition")
 Command failed: cds compile '*'
 [ERROR] db/schema.cds:3:9-13: Artifact "UUID" has not been found (in
 using:"UUID")
 [ERROR] db/schema.cds:3:15-26: Artifact "Composition" has not been found (in
 using: "Composition")
```

Thus, the system message manager tries again, resubmitting the server generation request to the GAI model. When the server files are successfully compiled, the system message manager can move on to arranging to get sample server data generated. As mentioned earlier, one or more statements are created along with one or more files lacking data. These statements and files are then added to a different system message to the prompt to create the data generation request, such as the following:

```
 You are an expert in the SAP Cloud Application Programming Model. Do not
 generate anything right now and wait for further input in another prompt. Also don't
 generate an example or any explanations. Your job is it to wait for further user input
 and create appropriate and realistic test data. It should be at least 5 rows per file. Do
 not forget the header line in each file. Make sure that all keys are unique and that
 there are no duplicate lines so that there are no failed unique constraints. Interpret
 NVARCHAR(36) fields as UUID values (version 4). Datetimes have format "2021-
 06-27T14:52:23Z". Always use ";" as a delimiter in CSV files and not ",".\n' +
   '\n' +
   'Do not generate any explanation text or any other text, just the CSV files in the
 following format, nothing else:\n' +
   '\n' +
   '‴\n' +
   '###<filename1>\n' +
   '‴csv\n' +
   '<filecontent1>\n' +
   '‴\n' +
   '\n' +
   '###<filename2>\n' +
   '‴csv\n' +
   '<filecontent2>\n' +
   '‴\n' +
   '\n' +
   'etc.\n' +
   '‴\n' +
   '\n' +
   'Make sure the file content also has a header line, that means the first line of the
 CSV content is a list of the columns!\n' +
   'DO NOT GENERATE ANYTHING NOW AND WAIT FOR THE NEXT
 PROMPT!\n' +
   'You will receive SAP HANA hdbtable statements (model) and the
 corresponding CSV files which only contain the header line. Based on that
 information create new CSV files, keep the header line!\n' +
   "Do not generate anything right now and wait for further input in the next
 prompt, don't say anything now.\n"
 },
 {
  role: 'user',
  content: 'Model:\n' +
   'COLUMN TABLE warehouse_Warehouse (\n' +
   ' ID NVARCHAR(36) NOT NULL,\n' +
   ' name NVARCHAR(5000),\n' +
   ' location NVARCHAR(5000),\n' +
   ' PRIMARY KEY(ID)\n' +
   ') WITH ASSOCIATIONS (\n' +
   ' MANY TO MANY JOIN warehouse_Tiles AS tiles ON (tiles.warehouse_ID =
 ID)\n' +
   ')\n' +
   ',COLUMN TABLE warehouse_Tiles (\n' +
   ' ID NVARCHAR(36) NOT NULL,\n' +
   ' name NVARCHAR(5000),\n' +
   ' color NVARCHAR(5000),\n' +
   ' design NVARCHAR(5000),\n' +
   ' quantity INTEGER,\n' +
   ' warehouse_ID NVARCHAR(36),\n' +
   ' PRIMARY KEY(ID)\n' +
   ') WITH ASSOCIATIONS (\n' +
   ' MANY TO ONE JOIN warehouse_Warehouse AS warehouse ON
 (warehouse.ID = warehouse_ID)\n' +
   ')\n' +
   '\n' +
   '\n' +
   '\n' +
   '\n' +
   'CSV files without data:\n' +
   '###warehouse-Tiles.csv\n' +
   '‴csv\n' +
   'ID,name, color,design,quantity, warehouse_ID\n' +
   '‴\n' +
   '###warehouse- Warehouse.csv\n' +
   '‴csv\n' +
   'ID,name,location\n' +
   '‴'
 ]
```

In this example, the GAI model then returns the following server data:

```
 ###warehouse-Warehouse.csv
 ‴csv
 ID,name,location
 f71df848-a1d5-41b5-b0ae-5cd5b44bb5d1,Warehouse A,New York
 8d24de97-764e-40bd-9c9b-c23a73124325,Warehouse B,Los Angeles
 74e3d60c-981d-4470-9e32-9f1f2da4d4fe, Warehouse C,Houston
 a932d88f-521e-4a68-80db-9ac93d0b4991,Warehouse D,Miami
 149761b7-cd93-413c-9f56-775175c9eaf8,Warehouse E,Chicago
 ‴
 ###warehouse-Tiles.csv
 ‴csv
 ID,name,color,design,quantity,warehouse_ID
 00e09604-7bc8-4075-89c5-54663e6295e5,Tile 1,Red,Regular,100,f71df848-ald5-
 41b5-b0ae-5cd5b44bb5d1
 6529e84d-e571-4e7e-b127-91d3cbd71205,Tile 2,Blue,Regular,80,8d24de97-764e-
 40bd-9c9b-c23a73124325
 973c6f27-c6fa-4a9b-81f2-1ffl228acc24,Tile 3,White, Textured, 150,74e3d60c-981d-
 4470-9e32-9f1f2da4d4fe
 02f98609-c5ca-4345-ad5d-e62d939f7c81,Tile 4,Black,Patterned,70,a932d88f-521e-
 4a68-80db-9ac93d0b4991
 43bef353-1ebe-4282-9465-10d5cd5a862d,Tile 5,Green,Textured,200,149761b7-
 cd93-413c-9f56-775175c9eaf8
 ‴
```

The generated server can then be tested using the generated server data to validate the generated server. If something fails, either the server or the server data (or both) can be regenerated. It should be noted that while this regeneration can be performed automatically, it is also possible for the user to trigger regeneration to address specific needs. For example, the user may look at the generated server data and realize that there are not enough properties in the data regarding warehouse to describe the owner and location. As such, the user may add the following prompt:
"add 10 more realistic properties to warehouse to describe the owner and the location"

In response, the GAI model can regenerate the server data, as follows:

```
###warehouse-Tiles.csv
 ‴csv
 ID;name;color;design;quantity;warehouse_ID
 00e09604-7bc8-4075-89c5-54663e6295e5;Tile 1;Red;Regular;100;f71df848-a1d5-
 41b5-b0ae-5cd5b44bb5d1
 6529e84d-e571-4e7e-b127-91d3cbd71205;Tile 2;Blue;Regular;80;8d24de97-764e-
 40bd-9c9b-c23a73124325
 973c6f27-c6fa-4a9b-81f2-1ff2228acc24;Tile 3;White;Textured;150;74e3d60c-
 981d-4470-9e32-9f1f2da4d4fe
 02f98609-c5ca-4345-ad5d-e62d939f7c81;Tile 4;Black;Patterned;70;a932d88f-
 521e-4a68-80db-9ac93d0b4991
 43bef353-1ebe-4282-9465-f0d5cd5a862d;Tile 5;Green;Textured;200;149761b7-
 cd93-413c-9f56-775175c9eaf8
 ‴
 ###warehouse-Warehouse.csv
 ‴csv
 ID;name;location;ownerName;ownerEmail;ownerPhone;addressLine1;addressLine2
 ;city;state;country;postalCode;latitude;longitude
 f71df848-a1d5-41b5-bOae-5cd5b44bb5d1;Warehouse A;New York;John
 Doe;john.doe@example.com;+1-555-123456;123 Main St;Apt 4B;New York;New
 York;USA;10001;40.7128;-74.0060
 8d24de97-764e-40bd-9c9b-c23a73124325;Warehouse B;Los Angeles;Jane
 Smith;jane.smith@example.com;+1-555-234567;456 SunsetBlvd;;;Los
 Angeles;California;USA;90028;34.0522;-118.2437
 74e3d60c-981d-4470-9e32-9f1f2da4d4fe;Warehouse C;Houston;Jim
 Brown;jim.brown@example.com;+1-555-345678;789Houston
 St;;;Houston;Texas;USA;77007;29.7604;-95.3698
 a932d88f-521e-4a68-80db-9ac93d0b4991;Warehouse D;Miami;Julia
 Green;julia.green@example.com;+1-555-456789;1012 Ocean
 Dr;;;Miami;Florida;USA;33139;25.7617;-80.1918
 149761b7-cd93-413c-9f56-775175c9eaf8;Warehouse E;Chicago;Carl
 White;carl.white@example.com;+1-555-567890;1313 Lakeshore
 Dr;;;Chicago;Illinois;USA;60601;41.8781;-87.6298
```

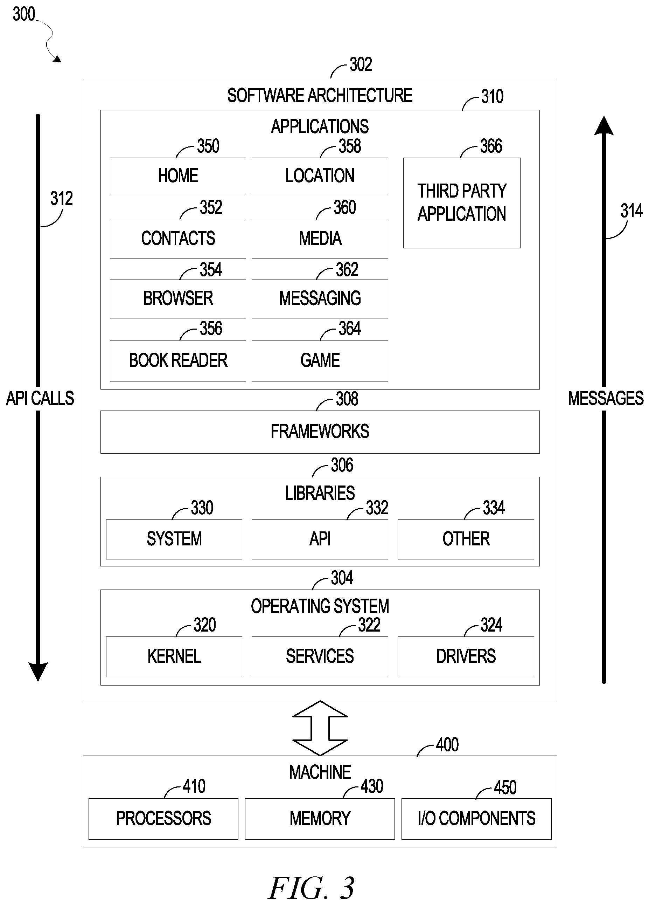

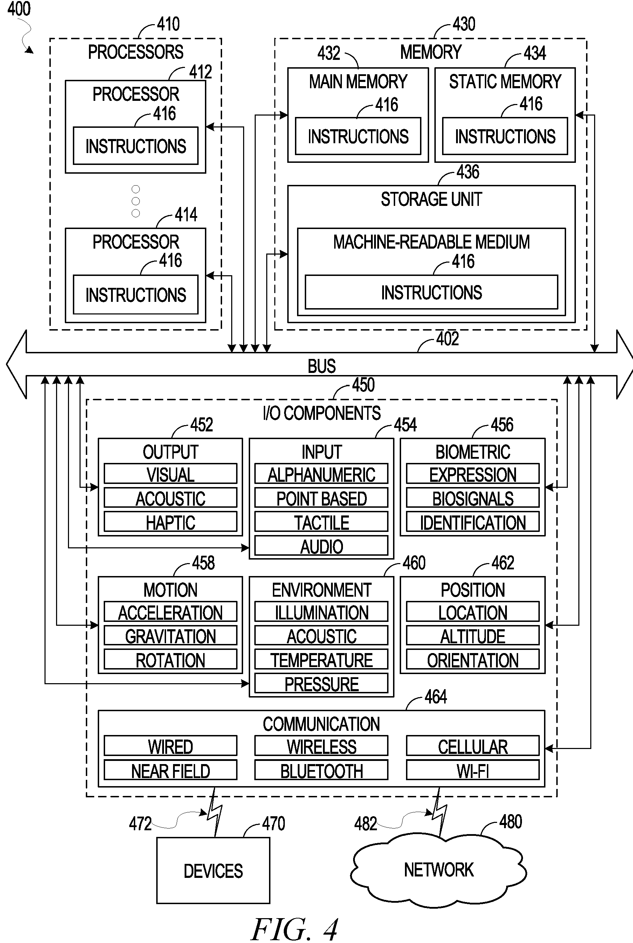

Figure 3 is a block diagram 300 illustrating a software architecture 302, which can be installed on any one or more of the devices described above. Figure 3 is merely a non-limiting example of a software architecture, and it will be appreciated that many other architectures can be implemented to facilitate the functionality described herein. In various embodiments, the software architecture 302 is implemented by hardware such as a machine 400 of Figure 4 that includes processors 410, memory 430, and input/output (I/O) components 450. In this example architecture, the software architecture 302 can be conceptualized as a stack of layers where each layer may provide a particular functionality. For example, the software architecture 302 includes layers such as an operating system 304, libraries 306, frameworks 308, and applications 310. Operationally, the applications 310 invoke API calls 312 through the software stack and receive messages 314 in response to the API calls 312, consistent with some embodiments.

In various implementations, the operating system 304 manages hardware resources and provides common services. The operating system 304 includes, for example, a kernel 320, services 322, and drivers 324. The kernel 320 acts as an abstraction layer between the hardware and the other software layers, consistent with some embodiments. For example, the kernel 320 provides memory management, processor management (e.g., scheduling), component management, networking, and security settings, among other functionalities. The services 322 can provide other common services for the other software layers. The drivers 324 are responsible for controlling or interfacing with the underlying hardware, according to some embodiments. For instance, the drivers 324 can include display drivers, camera drivers, BLUETOOTH^{®} or BLUETOOTH^{®} Low-Energy drivers, flash memory drivers, serial communication drivers (e.g., Universal Serial Bus (USB) drivers), Wi-Fi^{®} drivers, audio drivers, power management drivers, and so forth.

In some embodiments, the libraries 306 provide a low-level common infrastructure utilized by the applications 310. The libraries 306 can include system libraries 330 (e.g., C standard library) that can provide functions such as memory allocation functions, string manipulation functions, mathematic functions, and the like. In addition, the libraries 306 can include API libraries 332 such as media libraries (e.g., libraries to support presentation and manipulation of various media formats such as Moving Picture Experts Group-4 (MPEG4), Advanced Video Coding (H.264 or AVC), Moving Picture Experts Group Layer-3 (MP3), Advanced Audio Coding (AAC), Adaptive Multi-Rate (AMR) audio codec, Joint Photographic Experts Group (JPEG or JPG), or Portable Network Graphics (PNG)), graphics libraries (e.g., an OpenGL framework used to render in two dimensions (2D) and three dimensions (3D) in a graphic context on a display), database libraries (e.g., SQLite to provide various relational database functions), web libraries (e.g., WebKit to provide web browsing functionality), and the like. The libraries 306 can also include a wide variety of other libraries 334 to provide many other APIs to the applications 310.

The frameworks 308 provide a high-level common infrastructure that can be utilized by the applications 310, according to some embodiments. For example, the frameworks 308 provide various GUI functions, high-level resource management, high-level location services, and so forth. The frameworks 308 can provide a broad spectrum of other APIs that can be utilized by the applications 310, some of which may be specific to a particular operating system 304 or platform.

In an example embodiment, the applications 310 include a home application 350, a contacts application 352, a browser application 354, a book reader application 356, a location application 358, a media application 360, a messaging application 362, a game application 364, and a broad assortment of other applications, such as a third-party application 366. According to some embodiments, the applications 310 are programs that execute functions defined in the programs. Various programming languages can be employed to create one or more of the applications 310, structured in a variety of manners, such as object-oriented programming languages (e.g., Objective-C, Java, or C++) or procedural programming languages (e.g., C or assembly language). In a specific example, the third-party application 366 (e.g., an application developed using the ANDROID^{™} or IOS^{™} software development kit (SDK) by an entity other than the vendor of the particular platform) may be mobile software running on a mobile operating system such as IOS^{™}, ANDROID^{™}, WINDOWS^{®} Phone, or another mobile operating system. In this example, the third-party application 366 can invoke the API calls 312 provided by the operating system 304 to facilitate functionality described herein.

Figure 4 illustrates a diagrammatic representation of a machine 400 in the form of a computer system within which a set of instructions may be executed for causing the machine 400 to perform any one or more of the methodologies discussed herein, according to an example embodiment. Specifically, Figure 4 shows a diagrammatic representation of the machine 400 in the example form of a computer system, within which instructions 416 (e.g., software, a program, an application, an applet, an app, or other executable code) for causing the machine 400 to perform any one or more of the methodologies discussed herein may be executed. For example, the instructions 416 may cause the machine 400 to execute the method 200 of Figure 2. Additionally, or alternatively, the instructions 416 may implement Figures 1-2 and so forth. The instructions 416 transform the general, non-programmed machine 400 into a particular machine 400 programmed to carry out the described and illustrated functions in the manner described. In alternative embodiments, the machine 400 operates as a standalone device or may be coupled (e.g., networked) to other machines. In a networked deployment, the machine 400 may operate in the capacity of a server machine or a client machine in a server-client network environment, or as a peer machine in a peer-to-peer (or distributed) network environment. The machine 400 may comprise, but not be limited to, a server computer, a client computer, a personal computer (PC), a tablet computer, a laptop computer, a netbook, a set-top box (STB), a personal digital assistant (PDA), an entertainment media system, a cellular telephone, a smart phone, a mobile device, a wearable device (e.g., a smart watch), a smart home device (e.g., a smart appliance), other smart devices, a web appliance, a network router, a network switch, a network bridge, or any machine capable of executing the instructions 416, sequentially or otherwise, that specify actions to be taken by the machine 400. Further, while only a single machine 400 is illustrated, the term "machine" shall also be taken to include a collection of machines 400 that individually or jointly execute the instructions 416 to perform any one or more of the methodologies discussed herein.

The machine 400 may include processors 410, memory 430, and I/O components 450, which may be configured to communicate with each other such as via a bus 402. In an example embodiment, the processors 410 (e.g., a central processing unit (CPU), a reduced instruction set computing (RISC) processor, a complex instruction set computing (CISC) processor, a graphics processing unit (GPU), a digital signal processor (DSP), an application-specific integrated circuit (ASIC), a radio-frequency integrated circuit (RFIC), another processor, or any suitable combination thereof) may include, for example, a processor 412 and a processor 414 that may execute the instructions 416. The term "processor" is intended to include multi-core processors that may comprise two or more independent processors (sometimes referred to as "cores") that may execute instructions 416 contemporaneously. Although Figure 4 shows multiple processors 410, the machine 400 may include a single processor 412 with a single core, a single processor 412 with multiple cores (e.g., a multi-core processor 412), multiple processors 412, 414 with a single core, multiple processors 412, 414 with multiple cores, or any combination thereof.

The memory 430 may include a main memory 432, a static memory 434, and a storage unit 436, each accessible to the processors 410 such as via the bus 402. The main memory 432, the static memory 434, and the storage unit 436 store the instructions 416 embodying any one or more of the methodologies or functions described herein. The instructions 416 may also reside, completely or partially, within the main memory 432, within the static memory 434, within the storage unit 436, within at least one of the processors 410 (e.g., within the processor's cache memory), or any suitable combination thereof, during execution thereof by the machine 400.

The I/O components 450 may include a wide variety of components to receive input, provide output, produce output, transmit information, exchange information, capture measurements, and so on. The specific I/O components 450 that are included in a particular machine will depend on the type of machine. For example, portable machines such as mobile phones will likely include a touch input device or other such input mechanisms, while a headless server machine will likely not include such a touch input device. It will be appreciated that the I/O components 450 may include many other components that are not shown in Figure 4. The I/O components 450 are grouped according to functionality merely for simplifying the following discussion, and the grouping is in no way limiting. In various example embodiments, the I/O components 450 may include output components 452 and input components 454. The output components 452 may include visual components (e.g., a display such as a plasma display panel (PDP), a light-emitting diode (LED) display, a liquid crystal display (LCD), a projector, or a cathode ray tube (CRT)), acoustic components (e.g., speakers), haptic components (e.g., a vibratory motor, resistance mechanisms), other signal generators, and so forth. The input components 454 may include alphanumeric input components (e.g., a keyboard, a touch screen configured to receive alphanumeric input, a photo-optical keyboard, or other alphanumeric input components), point-based input components (e.g., a mouse, a touchpad, a trackball, a joystick, a motion sensor, or another pointing instrument), tactile input components (e.g., a physical button, a touch screen that provides location and/or force of touches or touch gestures, or other tactile input components), audio input components (e.g., a microphone), and the like.

In further example embodiments, the I/O components 450 may include biometric components 456, motion components 458, environmental components 460, or position components 462, among a wide array of other components. For example, the biometric components 456 may include components to detect expressions (e.g., hand expressions, facial expressions, vocal expressions, body gestures, or eye tracking), measure biosignals (e.g., blood pressure, heart rate, body temperature, perspiration, or brain waves), identify a person (e.g., voice identification, retinal identification, facial identification, fingerprint identification, or electroencephalogram-based identification), and the like. The motion components 458 may include acceleration sensor components (e.g., accelerometer), gravitation sensor components, rotation sensor components (e.g., gyroscope), and so forth. The environmental components 460 may include, for example, illumination sensor components (e.g., photometer), temperature sensor components (e.g., one or more thermometers that detect ambient temperature), humidity sensor components, pressure sensor components (e.g., barometer), acoustic sensor components (e.g., one or more microphones that detect background noise), proximity sensor components (e.g., infrared sensors that detect nearby objects), gas sensors (e.g., gas detection sensors to detect concentrations of hazardous gases for safety or to measure pollutants in the atmosphere), or other components that may provide indications, measurements, or signals corresponding to a surrounding physical environment. The position components 462 may include location sensor components (e.g., a Global Positioning System (GPS) receiver component), altitude sensor components (e.g., altimeters or barometers that detect air pressure from which altitude may be derived), orientation sensor components (e.g., magnetometers), and the like.

Communication may be implemented using a wide variety of technologies. The I/O components 450 may include communication components 464 operable to couple the machine 400 to a network 480 or devices 470 via a coupling 482 and a coupling 472, respectively. For example, the communication components 464 may include a network interface component or another suitable device to interface with the network 480. In further examples, the communication components 464 may include wired communication components, wireless communication components, cellular communication components, near field communication (NFC) components, Bluetooth^{®} components (e.g., Bluetooth^{®} Low Energy), Wi-Fi^{®} components, and other communication components to provide communication via other modalities. The devices 470 may be another machine or any of a wide variety of peripheral devices (e.g., coupled via a USB).

Moreover, the communication components 464 may detect identifiers or include components operable to detect identifiers. For example, the communication components 464 may include radio-frequency identification (RFID) tag reader components, NFC smart tag detection components, optical reader components (e.g., an optical sensor to detect one-dimensional bar codes such as Universal Product Code (UPC) bar code, multi-dimensional bar codes such as QR code, Aztec code, Data Matrix, Dataglyph, MaxiCode, PDF417, Ultra Code, UCC RSS-2D bar code, and other optical codes), or acoustic detection components (e.g., microphones to identify tagged audio signals). In addition, a variety of information may be derived via the communication components 464, such as location via Internet Protocol (IP) geolocation, location via Wi-Fi^{®} signal triangulation, location via detecting an NFC beacon signal that may indicate a particular location, and so forth.

The various memories (e.g., 430, 432, 434, and/or memory of the processor(s) 410) and/or the storage unit 436 may store one or more sets of instructions 416 and data structures (e.g., software) embodying or utilized by any one or more of the methodologies or functions described herein. These instructions (e.g., the instructions 416), when executed by the processor(s) 410, cause various operations to implement the disclosed embodiments.

As used herein, the terms "machine-storage medium," "device-storage medium," and "computer-storage medium" mean the same thing and may be used interchangeably. The terms refer to a single or multiple storage devices and/or media (e.g., a centralized or distributed database, and/or associated caches and servers) that store executable instructions and/or data. The terms shall accordingly be taken to include, but not be limited to, solid-state memories, and optical and magnetic media, including memory internal or external to processors. Specific examples of machine-storage media, computer-storage media, and/or device-storage media include non-volatile memory, including by way of example semiconductor memory devices, e.g., erasable programmable read-only memory (EPROM), electrically erasable programmable read-only memory (EEPROM), field-programmable gate array (FPGA), and flash memory devices; magnetic disks such as internal hard disks and removable disks; magneto-optical disks; and CD-ROM and DVD-ROM disks. The terms "machine-storage media," "computer-storage media," and "device-storage media" specifically exclude carrier waves, modulated data signals, and other such media, at least some of which are covered under the term "signal medium" discussed below.

In various example embodiments, one or more portions of the network 480 may be an ad hoc network, an intranet, an extranet, a virtual private network (VPN), a local-area network (LAN), a wireless LAN (WLAN), a wide-area network (WAN), a wireless WAN (WWAN), a metropolitan-area network (MAN), the Internet, a portion of the Internet, a portion of the public switched telephone network (PSTN), a plain old telephone service (POTS) network, a cellular telephone network, a wireless network, a Wi-Fi^{®} network, another type of network, or a combination of two or more such networks. For example, the network 480 or a portion of the network 480 may include a wireless or cellular network, and the coupling 482 may be a Code Division Multiple Access (CDMA) connection, a Global System for Mobile communications (GSM) connection, or another type of cellular or wireless coupling. In this example, the coupling 482 may implement any of a variety of types of data transfer technology, such as Single Carrier Radio Transmission Technology (1xRTT), Evolution-Data Optimized (EVDO) technology, General Packet Radio Service (GPRS) technology, Enhanced Data rates for GSM Evolution (EDGE) technology, third Generation Partnership Project (3GPP) including 3G, fourth generation wireless (4G) networks, Universal Mobile Telecommunications System (UMTS), High-Speed Packet Access (HSPA), Worldwide Interoperability for Microwave Access (WiMAX), Long-Term Evolution (LTE) standard, others defined by various standard-setting organizations, other long-range protocols, or other data transfer technology.

The instructions 416 may be transmitted or received over the network 480 using a transmission medium via a network interface device (e.g., a network interface component included in the communication components 464) and utilizing any one of a number of well-known transfer protocols (e.g., HTTP). Similarly, the instructions 416 may be transmitted or received using a transmission medium via the coupling 472 (e.g., a peer-to-peer coupling) to the devices 470. The terms "transmission medium" and "signal medium" mean the same thing and may be used interchangeably in this disclosure. The terms "transmission medium" and "signal medium" shall be taken to include any intangible medium that is capable of storing, encoding, or carrying the instructions 416 for execution by the machine 400, and include digital or analog communications signals or other intangible media to facilitate communication of such software. Hence, the terms "transmission medium" and "signal medium" shall be taken to include any form of modulated data signal, carrier wave, and so forth. The term "modulated data signal" means a signal that has one or more of its characteristics set or changed in such a manner as to encode information in the signal.

The terms "machine-readable medium," "computer-readable medium," and "device-readable medium" mean the same thing and may be used interchangeably in this disclosure. The terms are defined to include both machine-storage media and transmission media. Thus, the terms include both storage devices/media and carrier waves/modulated data signals.

## Claims

1. A system (100) for generating a software server, the system (100) comprising:
a generative artificial intelligence (GAI) model (108) for server generation, wherein the GAI model (108) is implemented as a generative pre-trained transformer (GPT) model or a bidirectional encoder or a Variational AutoEncoders (VAEs) model;
a server repository (112); and
a framework server (102) configured to perform operations comprising:
receiving (202), from a framework client (104), a text-based prompt describing one or more services;
creating (204) a server generation request comprising the text-based prompt and a first pre-designed system message providing additional detail as to what the GAI model (108) should generate;
feeding (206) the server generation request to the GAI model (108) to generate one or more server files defining a model definition for a service executable in the framework server (102), wherein the one or more server files are in a declarative format;
validating (208) the one or more server files;
if the one or more server files are successfully validated, then creating (212) a data generation request using the text-based prompt and a second pre-designed system message;
feeding (214) the data generation request to the GAI model (108) to generate one or more server data files;
testing (216) the one or more server files using the one or more server data files;
if the one or more server files pass the testing, then storing (220) the generated one or more server files in the server repository (112) and the generated one or more server data files in a data repository (114), and
executing the server files in the server repository (112) to run the generated software server.

2. The system of claim 1, wherein the one or more server files include a schema file and a service file;
wherein the schema file and the service file define an Open Data Protocol (OData) service.

3. The system of claim 1 or 2, wherein the operations further comprise:
in response to a determination that the one or more server files have failed the validation, retrying the feeding of the server generation request to the GAI model (108).

4. The system of claim 3, wherein the validating includes attempting to compile the one or more server files; and/or
wherein the validating includes performing one or more tests on the one or more server files using the one or more server data files.

5. A method (200) for generating a software server by using a generative artificial intelligence (GAI) model (108) for server generation, wherein the GAI model (108) is implemented as a generative pre-trained transformer (GPT) model or a bidirectional encoder or a Variational AutoEncoders (VAEs) model, the method (100) comprising:
receiving (202), from a framework client (104), a text-based prompt describing one or more services;
creating (204) a server generation request comprising the text-based prompt and a first pre-designed system message providing additional detail as to what the GAI model (108) should generate;
feeding (206) the server generation request to the GAI model (108) to generate one or more server files defining a model definition for a service executable in the framework server (102), wherein the one or more server files are in a declarative format;
validating (208) the one or more server files;
if the one or more server files are successfully validated, then creating (212) a data generation request using the text-based prompt and a second pre-designed system message;
feeding (214) the data generation request to the GAI model (108) to generate one or more server data files;
testing (216) the one or more server files using the one or more server data files;
if the one or more server files pass the testing, then storing (220) the generated one or more server files in a server repository (112) and the generated one or more server data files in a data repository (114), and
executing the server files in the server repository (112) to run the generated software server.

6. The method of claim 5, wherein the one or more server files include a schema file and a service file;
wherein the schema file and the service file define an Open Data Protocol (OData) service.

7. The method of claim 5 or 6, further comprising:
in response to a determination that the one or more server files have failed the validation, retrying the feeding of the server generation request to the GAI model (108).

8. The method of claim 7, wherein the validating includes attempting to compile the one or more server files; and/or
wherein the validating includes performing one or more tests on the one or more server files using the one or more server data files.

9. A non-transitory machine-readable medium storing instructions which, when executed by one or more processors, cause the one or more processors to perform operations for generating a software server by using a generative artificial intelligence (GAI) model (108) for server generation, wherein the GAI model (108) is implemented as a generative pre-trained transformer (GPT) model or a bidirectional encoder or a Variational AutoEncoders (VAEs) model, the operations comprising:
receiving (202), from a framework client (104), a text-based prompt describing one or more services;
creating (204) a server generation request comprising the text-based prompt and a first pre-designed system message providing additional detail as to what the GAI model (108) should generate;
feeding (206) the server generation request to the GAI model (108) to generate one or more server files defining a model definition for a service executable in the framework server (102), wherein the one or more server files are in a declarative format;
validating (208) the one or more server files;
if the one or more server files are successfully validated, then creating (212) a data generation request using the text-based prompt and a second pre-designed system message;
feeding (214) the data generation request to the GAI model (108) to generate one or more server data files;
testing (216) the one or more server files using the one or more server data files;
if the one or more server files pass the testing, then storing (220) the generated one or more server files in a server repository (112) and the generated one or more server data files in a data repository (114), and
executing the server files in the server repository (112) to run the generated software server.

10. The non-transitory machine-readable medium of claim 9, wherein the one or more server files include a schema file and a service file;
wherein the schema file and the service file define an Open Data Protocol (OData) service.

## Patentansprüche

1. System (100) zum Erzeugen eines Softwareservers, wobei das System (100) umfasst:
ein generatives künstliche Intelligenz (GAI)-Modell (108) zur Servererzeugung, wobei das GAI-Modell (108) als generatives, im Vorhinein trainiertes Wandler (GPT)-Modell oder ein bidirektionaler Kodierer oder ein "Variational AutoEncoders" (VAEs)-Modell implementiert ist;
ein Server-Repository (112); und
einen Framework-Server (102), der zum Durchführen von Vorgängen ausgebildet ist, umfassend:
Empfangen (202), von einem Framework-Client (104), einer textbasierten Aufforderung, die ein oder mehrere Dienst(e) beschreibt;
Erzeugen (204) einer Servererzeugungsanfrage, welche die textbasierte Aufforderung und eine erste, im Vorhinein gestaltete Systemnachricht, die zusätzliche Details bezüglich dessen bereitstellt, was das GAI-Modell (108) erzeugen soll, umfasst;
Zuführen (206) der Servererzeugungsanfrage zu dem GAl-Modell (108) zum Erzeugen einer oder mehrerer Serverdatei(en), die eine Modelldefinition für einen Dienst festlegt/festlegen, der in dem Framework-Server (102) ausführbar ist, wobei die eine oder die mehreren Serverdatei(en) in einem deklaratorischen Format vorliegt/vorliegen;
Validieren (208) der einen oder der mehreren Serverdatei(en);
wenn die eine oder die mehreren Serverdatei(en) erfolgreich validiert worden ist/sind, dann Erzeugen (212) einer Datenerzeugungsanfrage unter Verwendung der textbasierten Aufforderung und einer zweiten im Vorhinein gestalteten Systemnachricht;
Zuführen (214) der Datenerzeugungsanfrage zu dem GAI-Modell (108) zum Erzeugen einer oder mehrerer Serverdatendatei(en);
Prüfen (216) der einen oder der mehreren Serverdatei(en) unter Verwendung der einen oder der mehreren Serverdatendatei(en);
wenn die eine oder die mehreren Serverdatei(en) das Prüfen bestehen, dann Speichern (220) der erzeugten einen oder mehreren Serverdatei(en) in dem Server-Repository (112) und der erzeugten einen oder mehreren Serverdatendatei(en) in einem Datenbehälter (114), und
Ausführen der Serverdateien in dem Server-Repository (112) zum Betreiben des erzeugten Softwareservers.

2. System nach Anspruch 1, wobei die eine oder die mehreren Serverdatei(en) eine Schemadatei und eine Dienstdatei umfassen;
wobei die Schemadatei und die Dienstdatei einen "Open Data Protocol" (OData)-Dienst festlegen.

3. System nach Anspruch 1 oder 2, wobei die Vorgänge ferner umfassen:
als Reaktion auf eine Bestimmung, dass die eine oder die mehreren Serverdatei(en) nicht validiert werden konnte(n), erneutes Versuchen des Zuführens der Servererzeugungsanfrage zu dem GAI-Modell (108).

4. System nach Anspruch 3, wobei das Validieren einen Versuch des Kompilierens der einen oder der mehreren Serverdatei(en) umfasst; und/oder
wobei das Validieren das Durchführen einer oder mehrerer Prüfung(en) mit der einen oder den mehreren Serverdatei(en) unter Verwendung der einen oder der mehreren Server-datendatei(en) umfasst.

5. Verfahren (200) zum Erzeugen eines Softwareservers durch Verwenden eines generativen künstliche Intelligenz (GAI)-Modells (108) zur Servererzeugung, wobei das GAI-Modell (108) als generatives, im Vorhinein trainiertes Wandler (GPT)-Modell oder ein bidirektionaler Kodierer oder ein "Variational AutoEncoders" (VAEs)-Modell implementiert ist, wobei das Verfahren (100) umfasst:
Empfangen (202), von einem Framework-Client (104), einer textbasierten Aufforderung, die ein oder mehrere Dienst(e) beschreibt;
Erzeugen (204) einer Servererzeugungsanfrage, welche die textbasierte Aufforderung und eine erste, im Vorhinein gestaltete Systemnachricht, die zusätzliche Details bezüglich dessen bereitstellt, was das GAI-Modell (108) erzeugen soll, umfasst;
Zuführen (206) der Servererzeugungsanfrage zu dem GAl-Modell (108) zum Erzeugen einer oder mehrerer Serverdatei(en), die eine Modelldefinition für einen Dienst festlegt/festlegen, der in dem Framework-Server (102) ausführbar ist, wobei die eine oder die mehreren Serverdatei(en) in einem deklaratorischen Format vorliegt/vorliegen;
Validieren (208) der einen oder der mehreren Serverdatei(en);
wenn die eine oder die mehreren Serverdatei(en) erfolgreich validiert worden ist/sind, dann Erzeugen (212) einer Datenerzeugungsanfrage unter Verwendung der textbasierten Aufforderung und einer zweiten im Vorhinein gestalteten Systemnachricht;
Zuführen (214) der Datenerzeugungsanfrage zu dem GAI-Modell (108) zum Erzeugen einer oder mehrerer Serverdatendatei(en);
Prüfen (216) der einen oder der mehreren Serverdatei(en) unter Verwendung der einen oder der mehreren Serverdatendatei(en);
wenn die eine oder die mehreren Serverdatei(en) das Prüfen bestehen, dann Speichern (220) der erzeugten einen oder mehreren Serverdatei(en) in einem Server-Repository (112) und der erzeugten einen oder mehreren Serverdatendatei(en) in einem Datenbehälter (114), und
Ausführen der Serverdateien in dem Server-Repository (112) zum Betreiben des erzeugten Softwareservers.

6. Verfahren nach Anspruch 5, wobei die eine oder die mehreren Serverdatei(en) eine Schemadatei und eine Dienstdatei umfassen;
wobei die Schemadatei und die Dienstdatei einen "Open Data Protocol" (OData)-Dienst festlegen.

7. Verfahren nach Anspruch 5 oder 6, ferner umfassend:
als Reaktion auf eine Bestimmung, dass die eine oder die mehreren Serverdatei(en) nicht validiert werden konnte(n), erneutes Versuchen des Zuführens der Servererzeugungsanfrage zu dem GAI-Modell (108).

8. Verfahren nach Anspruch 7, wobei das Validieren einen Versuch des Kompilierens der einen oder der mehreren Serverdatei(en) umfasst; und/oder
wobei das Validieren das Durchführen einer oder mehrerer Prüfung(en) mit der einen oder den mehreren Serverdatei(en) unter Verwendung der einen oder der mehreren Server-datendatei(en) umfasst.

9. Nicht-flüchtiges maschinenlesbares Medium, das Anweisungen speichert, die, wenn sie durch einen oder mehrere Prozessor(en) ausgeführt werden, bewirken, dass der eine oder die mehreren Prozessor(en) Vorgänge zum Erzeugen eines Softwareservers unter Verwendung eines generativen künstliche Intelligenz (GAI)-Modells (108) zur Servererzeugung durchführt/durchführen, wobei das GAI-Modell (108) als generatives, im Vorhinein trainiertes Wandler (GPT)-Modell oder ein bidirektionaler Kodierer oder ein "Variational AutoEncoders" (VAEs)-Modell implementiert ist, wobei die Vorgänge umfassen:
Empfangen (202), von einem Framework-Client (104), einer textbasierten Aufforderung, die ein oder mehrere Dienst(e) beschreibt;
Erzeugen (204) einer Servererzeugungsanfrage, welche die textbasierte Aufforderung und eine erste, im Vorhinein gestaltete Systemnachricht, die zusätzliche Details bezüglich dessen bereitstellt, was das GAI-Modell (108) erzeugen soll, umfasst;
Zuführen (206) der Servererzeugungsanfrage zu dem GAl-Modell (108) zum Erzeugen einer oder mehrerer Serverdatei(en), die eine Modelldefinition für einen Dienst festlegt/festlegen, der in dem Framework-Server (102) ausführbar ist, wobei die eine oder die mehreren Serverdatei(en) in einem deklaratorischen Format vorliegt/vorliegen;
Validieren (208) der einen oder der mehreren Serverdatei(en);
wenn die eine oder die mehreren Serverdatei(en) erfolgreich validiert worden ist/sind, dann Erzeugen (212) einer Datenerzeugungsanfrage unter Verwendung der textbasierten Aufforderung und einer zweiten im Vorhinein gestalteten Systemnachricht;
Zuführen (214) der Datenerzeugungsanfrage zu dem GAI-Modell (108) zum Erzeugen einer oder mehrerer Serverdatendatei(en);
Prüfen (216) der einen oder der mehrere Serverdatei(en) unter Verwendung der einen oder der mehreren Serverdatendatei(en);
wenn die eine oder die mehreren Serverdatei(en) das Prüfen bestehen, dann Speichern (220) der erzeugten einen oder mehreren Serverdatei(en) in einem Server-Repository (112) und der erzeugten einen oder mehreren Serverdatendatei(en) in einem Datenbehälter (114), und
Ausführen der Serverdateien in dem Server-Repository (112) zum Betreiben des erzeugten Softwareservers.

10. Nicht-flüchtiges maschinenlesbares Medium nach Anspruch 9, wobei die eine oder die mehreren Serverdatei(en) eine Schemadatei und eine Dienstdatei umfassen;
wobei die Schemadatei und die Dienstdatei einen "Open Data Protocol" (OData)-Dienst festlegen.

## Revendications

1. Système (100) pour générer un serveur logiciel, le système (100) comprenant :
un modèle d'intelligence artificielle générative (GAI) (108) pour la génération de serveur, dans lequel le modèle de GAI (108) est mis en œuvre en tant que modèle de transformeur génératif préentraîné (GPT) ou encodeur bidirectionnel ou modèle d'autoencodeur variationnel (VAE) ;
un référentiel de serveur (112) ; et
un serveur cadre (102) configuré pour réaliser des opérations comprenant :
recevoir (202), d'un client cadre (104), une invite à base de texte décrivant un ou plusieurs services ;
créer (204) une requête de génération de serveur comprenant l'invite à base de texte et un premier message système préconçu fournissant des détails supplémentaires concernant ce que le modèle de GAI (108) doit générer ;
alimenter (206) la requête de génération de serveur au modèle de GAI (108) pour générer un ou plusieurs fichiers serveur définissant une définition de modèle pour un service exécutable dans le serveur cadre (102), dans lequel le ou les fichiers serveur sont dans un format déclaratif ;
valider (208) le ou les fichiers serveur ;
si le ou les fichiers serveur sont validés avec succès, créer (212) ensuite une requête de génération de données en utilisant l'invite à base de texte et un second message système préconçu ;
alimenter (214) la requête de génération de données au modèle de GAI (108) pour générer un ou plusieurs fichiers de données serveur ;
tester (216) le ou les fichiers serveur en utilisant le ou les fichiers de données serveur ;
si le ou les fichiers serveur réussissent le test, stocker (220) ensuite le ou les fichiers serveur générés dans le référentiel de serveur (112) et le ou les fichiers de données serveur générés dans un référentiel de données (114), et
exécuter les fichiers serveur dans le référentiel de serveur (112) pour exécuter le serveur logiciel généré.

2. Système selon la revendication 1, dans lequel le ou les fichiers serveur incluent un fichier de schéma et un fichier de service ;
dans lequel le fichier de schéma et le fichier de service définissent un service Open Data Protocol (OData).

3. Système selon la revendication 1 ou 2, dans lequel les opérations comprennent en outre :
en réponse à une détermination que le ou les fichiers serveur ont échoué à la validation, réessayer l'alimentation de la requête de génération de serveur au modèle de GAI (108).

4. Système selon la revendication 3, dans lequel la validation inclut tenter de compiler le ou les fichiers serveur ; et/ou
dans lequel la validation inclut réaliser un ou plusieurs tests sur le ou les fichiers serveur en utilisant le ou les fichiers de données serveur.

5. Procédé (200) pour générer un serveur logiciel en utilisant un modèle d'intelligence artificielle générative (GAI) (108) pour la génération de serveur, dans lequel le modèle de GAI (108) est mis en œuvre en tant que modèle de transformeur génératif préentraîné (GPT) ou encodeur bidirectionnel ou modèle d'autoencodeur variationnel (VAE), le procédé (100) comprenant :
recevoir (202), d'un client cadre (104), une invite à base de texte décrivant un ou plusieurs services ;
créer (204) une requête de génération de serveur comprenant l'invite à base de texte et un premier message système préconçu fournissant des détails supplémentaires concernant ce que le modèle de GAI (108) doit générer ;
alimenter (206) la requête de génération de serveur au modèle de GAI (108) pour générer un ou plusieurs fichiers serveur définissant une définition de modèle pour un service exécutable dans le serveur cadre (102), dans lequel le ou les fichiers serveur sont dans un format déclaratif ;
valider (208) le ou les fichiers serveur ;
si le ou les fichiers serveur sont validés avec succès, créer (212) ensuite une requête de génération de données en utilisant l'invite à base de texte et un second message système préconçu ;
alimenter (214) la requête de génération de données au modèle de GAI (108) pour générer un ou plusieurs fichiers de données serveur ;
tester (216) le ou les fichiers serveur en utilisant le ou les fichiers de données serveur ;
si le ou les fichiers serveur réussissent le test, stocker (220) ensuite le ou les fichiers serveur générés dans un référentiel de serveur (112) et le ou les fichiers de données serveur générés dans un référentiel de données (114), et
exécuter les fichiers serveur dans le référentiel de serveur (112) pour exécuter le serveur logiciel généré.

6. Procédé selon la revendication 5, dans lequel le ou les fichiers serveur incluent un fichier de schéma et un fichier de service ;
dans lequel le fichier de schéma et le fichier de service définissent un service Open Data Protocol (OData).

7. Procédé selon la revendication 5 ou 6, comprenant en outre :
en réponse à une détermination que le ou les fichiers serveur ont échoué à la validation, réessayer l'alimentation de la requête de génération de serveur au modèle de GAI (108).

8. Procédé selon la revendication 7, dans lequel la validation inclut tenter de compiler le ou les fichiers serveur ; et/ou
dans lequel la validation inclut réaliser un ou plusieurs tests sur le ou les fichiers serveur en utilisant le ou les fichiers de données serveur.

9. Support non transitoire lisible par une machine stockant des instructions qui, lors de leur exécution par un ou plusieurs processeurs, amènent le ou les processeurs à réaliser des opérations pour générer un serveur logiciel en utilisant un modèle d'intelligence artificielle générative (GAI) (108) pour la génération de serveur, dans lequel le modèle de GAI (108) est mis en œuvre en tant que modèle de transformeur génératif préentraîné (GPT) ou encodeur bidirectionnel ou modèle d'autoencodeur variationnel (VAE), les opérations comprenant :
recevoir (202), d'un client cadre (104), une invite à base de texte décrivant un ou plusieurs services ;
créer (204) une requête de génération de serveur comprenant l'invite à base de texte et un premier message système préconçu fournissant des détails supplémentaires concernant ce que le modèle de GAI (108) doit générer ;
alimenter (206) la requête de génération de serveur au modèle de GAI (108) pour générer un ou plusieurs fichiers serveur définissant une définition de modèle pour un service exécutable dans le serveur cadre (102), dans lequel le ou les fichiers serveur sont dans un format déclaratif ;
valider (208) le ou les fichiers serveur ;
si le ou les fichiers serveur sont validés avec succès, créer (212) ensuite une requête de génération de données en utilisant l'invite à base de texte et un second message système préconçu ;
alimenter (214) la requête de génération de données au modèle de GAI (108) pour générer un ou plusieurs fichiers de données serveur ;
tester (216) le ou les fichiers serveur en utilisant le ou les fichiers de données serveur ;
si le ou les fichiers serveur réussissent le test, stocker (220) ensuite le ou les fichiers serveur générés dans un référentiel de serveur (112) et le ou les fichiers de données serveur générés dans un référentiel de données (114), et
exécuter les fichiers serveur dans le référentiel de serveur (112) pour exécuter le serveur logiciel généré.

10. Support non transitoire lisible par une machine selon la revendication 9, dans lequel le ou les fichiers serveur incluent un fichier de schéma et un fichier de service ;
dans lequel le fichier de schéma et le fichier de service définissent un service Open Data Protocol (OData).
